# EUROPEAN PATENT APPLICATION

(11) **EP 4 811 103 A1**
(43) Date of publication of application: **23.09.2026**
(21) Application number: 25198996.8
(22) Date of filing: 29.08.2025
(51) Int. Cl.: G06F 3/12

(54) **INFORMATION PROCESSING SYSTEM, INFORMATION PROCESSING METHOD, AND INFORMATION PROCESSING PROGRAM**

(30) Priority: 21.03.2025 JP 2025047348
(71) Applicant: Fujifilm Business Innovation Corp., Tokyo 107-0052 (JP)
(72) Inventor: KODAMA, Mari, Yokohama (JP)
(74) Representative: Meissner Bolte Partnerschaft mbB

(57) **Abstract**

An information processing system includes a memory and a processor configured to: in a job management interface having areas where jobs are assignable to individual resources, accept selection of a specific area while a first schedule screen on which job assignment is limited is being displayed; display a second schedule screen on which the selected specific area is displayed at a larger scale than on the first schedule screen; and upon accepting placement of a card of an unassigned job on the second schedule screen, update the card of the accepted job to a corresponding position on the first schedule screen.

## Description

### Background

### (i) Technical Field

The present disclosure relates to an information processing system, an information processing method, and an information processing program.

### (ii) Related Art

Japanese Unexamined Patent Application Publication No. 2024-70719 discloses a technology for mitigating situations in which a production step is no longer assignable to an equipment operating schedule. Japanese Unexamined Patent Application Publication No. 2024-70719 discloses the feature whereby an association may be established between a production step and an equipment group that includes multiple pieces of equipment capable of executing the production step, and when such an association is established, the production step is assigned to the operating schedule of any of the multiple pieces of equipment.

Japanese Unexamined Patent Application Publication No. 2023-044514 discloses a technology for setting up a schedule of tasks in individual production steps according to the flow of production steps, without consulting a workflow diagram. Japanese Unexamined Patent Application Publication No. 2023-044514 discloses the feature whereby, when a task element is selected, individual task elements representing tasks in respective production steps of a product are displayed in a schedule setup area such that the form of the task elements is different from task elements associated with production steps for another, different product.

### Summary

Incidentally, the schedule screen of a production workflow may allow for management of the schedule while switching the time axis between short-term and long-term views, but on the schedule screen with the long-term time axis, the ability to display the contents of jobs and whitespace may be limited, and thus the ability to display updates and changes to jobs may be limited. In this situation, it may be necessary to switch to the schedule screen with the short-time time axis that allows for the assigning of jobs and adjust the display of equipment, the time frame, and the like, thus impairing convenience.

Accordingly, it is an object of the present disclosure to provide an information processing system, an information processing method, and an information processing program for improving the convenience of job assignment on a schedule screen on which job assignment operations are limited.

According to a first aspect of the present disclosure, there is provided an information processing system comprising a memory and a processor configured to: in a job management interface having areas where jobs are assignable to individual resources, accept selection of a specific area while a first schedule screen on which job assignment is limited is being displayed; display a second schedule screen on which the selected specific area is displayed at a larger scale than on the first schedule screen; and upon accepting placement of a card of an unassigned job on the second schedule screen, update the card of the accepted job to a corresponding position on the first schedule screen.

According to a second aspect of the present disclosure, in the information processing system according to the first aspect, the processor is configured to perform selection of the specific area according to selection of a range given by a user operation or selection in specific processing with respect to selection of an unassigned job.

According to a third aspect of the present disclosure, in the information processing system according to the second aspect, the processor is configured to perform the specific processing such that if the unassigned job is selected, a plurality of candidate areas to serve as candidates of the specific area that are selectable on the first schedule screen are displayed, and an enlarged view of the candidate area for which a selection is accepted from a user from among the plurality of candidate areas is displayed as the specific area on the second schedule screen.

According to a fourth aspect of the present disclosure, in the information processing system according to the third aspect, the processor is configured to perform the specific processing such that the candidate areas for the selected unassigned job are displayed upon being extracted by a trained model that has been trained in advance using a dataset based on user-selected areas.

According to a fifth aspect of the present disclosure, in the information processing system according to the third aspect, the processor is configured to perform the specific processing such that the candidate areas are determined and displayed for the selected unassigned job by referring to workflow information that includes attributes of jobs and attributes of resources to which jobs are assignable.

According to a sixth aspect of the present disclosure, in the information processing system according to the fifth aspect, the processor is configured to perform the specific processing such that workflow information about the selected unassigned job is referenced, areas that are free after the completion time of the job immediately before, before the start time of job immediately after, and for a length of time equal to or greater than a job duration calculated individually for each resource are determined as the candidate areas, and the determined candidate areas are displayed.

According to a seventh aspect of the present disclosure, in the information processing system according to any one of the second to sixth aspects, the processor is configured to perform the specific processing such that workflow information about the selected unassigned job is referenced, and if the selected unassigned job is followed by another, different job and the different job is unassigned, a second candidate area to serve as a candidate for scheduling the different job is also displayed on the second schedule screen.

According to an eighth aspect of the present disclosure, in the information processing system according to the seventh aspect, if there are a plurality of candidates of areas where the different job could be assigned, the processor is configured to display a list of the plurality of candidates, and accept selection of a candidate to be displayed on the second schedule screen from the list.

According to a ninth aspect of the present disclosure, in the information processing system according to the seventh aspect, after the card of the selected unassigned job is placed in an area of the second schedule screen, the processor is configured to determine and display the second candidate area to serve as a candidate for assignment of the different job based on the area where the unassigned job is placed.

According to a 10th aspect of the present disclosure, in the information processing system according to any one of the first to ninth aspects, operations related to assignment of the job on the first schedule screen are limited as a result of switching of a time axis, and the processor is configured to refer to attributes of the selected unassigned job and change the time axis on which operations are limited on the first schedule screen.

According to an 11th aspect of the present disclosure, there is provided an information processing method comprising: in a job management interface having areas where jobs are assignable to individual resources, accepting selection of a specific area while a first schedule screen on which job assignment is limited is being displayed; displaying a second schedule screen on which the selected specific area is displayed at a larger scale than on the first schedule screen; and upon accepting placement of a card of an unassigned job on the second schedule screen, updating the card of the accepted job to a corresponding position on the first schedule screen.

According to a 12th aspect of the present disclosure, there is provided an information processing program causing a computer to execute a process comprising: in a job management interface having areas where jobs are assignable to individual resources, accepting selection of a specific area while a first schedule screen on which job assignment is limited is being displayed; displaying a second schedule screen on which the selected specific area is displayed at a larger scale than on the first schedule screen; and upon accepting placement of a card of an unassigned job on the second schedule screen, updating the card of the accepted job to a corresponding position on the first schedule screen.

According to the first aspect, it is possible to improve the convenience of job assignment on a schedule screen on which job assignment operations are limited.

According to the second aspect, it is possible to improve convenience with consideration for the selection of a specific area.

According to the third aspect, it is possible to improve convenience by considering the display of multiple candidate areas as specific processing.

According to the fourth aspect, it is possible to improve the accuracy of candidate areas by considering the display of multiple candidate areas by a trained model.

According to the fifth aspect, it is possible to refer to a history and improve the accuracy of candidate areas by considering workflow information.

According to the sixth aspect, it is possible to refer to a history and improve the accuracy of candidate areas by considering workflow information.

According to the seventh aspect, it is possible to improve convenience by considering a candidate area for a different job.

According to the eighth aspect, it is possible to improve convenience by considering multiple candidate areas for a different job.

According to the ninth aspect, it is possible to improve convenience by adjusting the candidate area of a different job with consideration for the area where a job is placed.

According to the 10th aspect, it is possible to improve convenience by considering the attributes of a job on a schedule screen with a time axis.

According to the 11th aspect, it is possible to improve the convenience of job assignment on a schedule screen on which job assignment operations are limited.

According to the 12th aspect, it is possible to improve the convenience of job assignment on a schedule screen on which job assignment operations are limited.

### Brief Description of the Drawings

An exemplary embodiment of the present disclosure will be described in detail based on the following figures, wherein:
Fig. 1 is a schematic diagram illustrating a production system according to an exemplary embodiment;
Fig. 2 is a block diagram illustrating an example of a functional configuration of a production management system according to an exemplary embodiment;
Fig. 3 is a diagram illustrating an example of a job management interface;
Fig. 4 is a display example in the case of changing the time-period units of a schedule screen;
Fig. 5 is a display example in the case of changing the time-period units of a schedule screen;
Fig. 6 is an example of accepting selection of the range of a specific area according to a user operation, and displaying the selected range as a specific area on a second schedule screen;
Fig. 7 is an example of accepting selection of the range of a specific area from specific processing, and displaying the selected range on a second schedule screen;
Fig. 8 is an example of displaying a second schedule screen corresponding to a printer that corresponds to a print job, and also displaying a second schedule screen corresponding to a processing machine that serves as a candidate for a processing job;
Fig. 9 is an example of displaying a list of multiple candidates and prompting a user to select a candidate to be displayed; and
Fig. 10 is a flowchart illustrating an example of the flow of information processes executed by a production management system.

### Detailed Description

Hereinafter, an exemplary embodiment according to the present disclosure will be described with reference to the drawings. Note that in the drawings, identical or similar components and portions are denoted with the same reference signs. Also, the dimension ratios in the drawings have been exaggerated for clarity, and may be different from the actual ratios in some cases.

### <Production system 1>

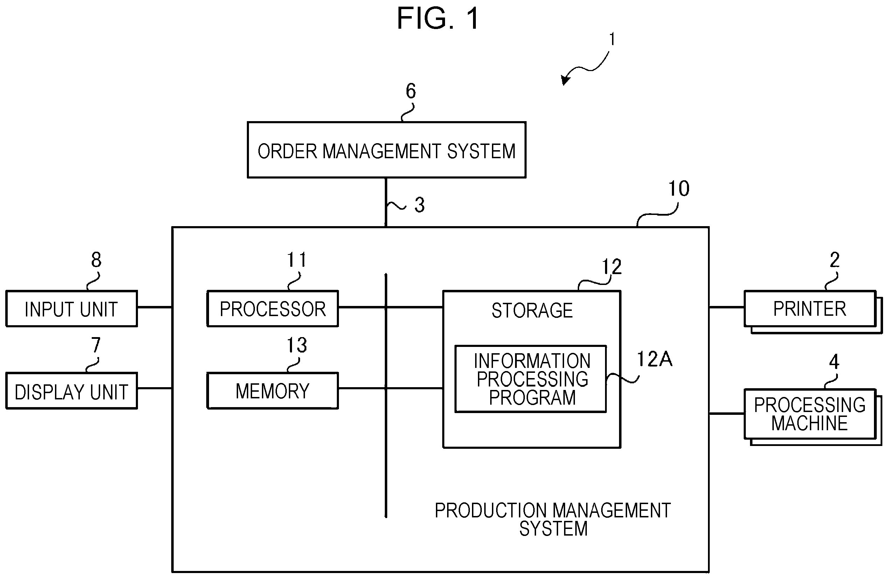

First, a production system 1 according to the exemplary embodiment will be described. Fig. 1 is a schematic diagram illustrating the production system 1 according to the exemplary embodiment.

The production system 1 is a system for producing products (specifically printed material). In the exemplary embodiment, the production system 1 receives an order for producing printed material, generates a production plan, and equipment produces the printed material in accordance with the production plan.

The production of printed material is one example of a task. The production of printed material is a concept that encompasses each step to be executed to produce printed material. The printed material may be any of books, booklets, and flyers, for example.

Specifically, as illustrated in Fig. 1, the production system 1 is provided with multiple printers 2, multiple processing machines 4, an order management system 6, a display unit 7, an input unit 8, and a production management system 10.

As illustrated in Fig. 1, the components of the production system 1 are connected by communication lines 3. The communication lines 3 use wired lines, wireless channels, or both, for example. Communication lines using wireless channels may use the Internet or an intranet, for example. Hereinafter, each component of the production system 1 will be described.

Note that the product to be produced is not limited to the example of printed material and may be some other industrial product, or may be a product produced by equipment. In the present disclosure, tasks are not limited to the production of printed material and may also be the production of a product other than printed material, or other tasks such as control and/or manipulation. Consequently, a production system according to an exemplary embodiment of the present disclosure may also be a system that produces products other than printed material. A system according to an exemplary embodiment of the present disclosure may also be a task system for performing tasks that are not associated with the production of products.

### <Printers 2 and processing machines 4>

The printers 2 and processing machines 4 are examples of equipment capable of performing tasks. The multiple printers 2 are pieces of equipment used to print onto recording media. The multiple processing machines 4 are pieces of equipment used to process the recording media on which printing has been performed. The processing machines 4 may be, among other things, cutting machines for cutting the recording media, binding machines for binding the recording media, and hole-punching machines for punching holes into the recording media. In the following, the printers 2 and processing machines 4 may be collectively referred to as the equipment 2, 4. The equipment 2, 4 are an example of resources in the present disclosure, but resources otherwise include workers and the like.

### <Order management system 6>

The order management system 6 is a system that manages information (hereinafter referred to as production information) related to the production of printed material ordered by a customer. The order management system 6, upon receiving an order for the production of printed material from a customer, sends production information regarding the printed material to the production management system 10 via the communication line 3.

### <Display unit 7 and input unit 8>

The display unit 7 is an example of a display, and is a component that displays presentation information to be presented to a user. Specifically, in one example, the display unit 7 is configured as a liquid crystal display (LCD) panel. Note that the display unit 7 is not limited to an LCD panel and may also be an organic light-emitting diode (OLED) display panel or any other device capable of displaying presentation information to be presented to a user.

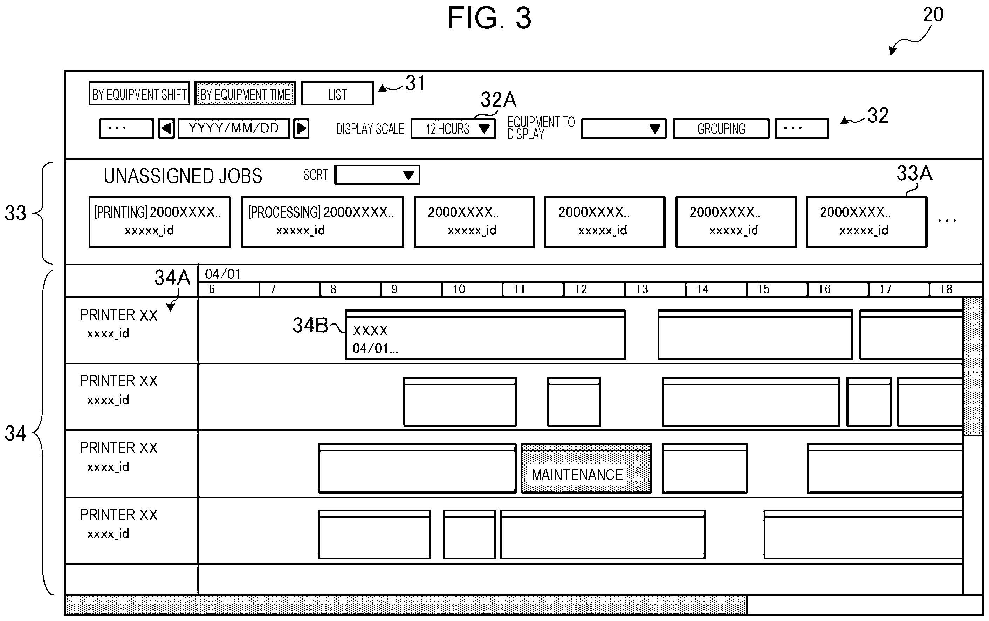

The display screens to be displayed by the display unit 7 include a job management interface 20 (see Fig. 3). The job management interface 20 has an area in which jobs may be assigned to discrete resources, and includes a schedule screen 34 that accepts and reflects the placement of job cards. Specific forms of the job management interface 20 and the schedule screen 34 will be described later. In the present disclosure, a job refers to a process to be executed by resources such as the equipment 2, 4; examples of jobs include prepress processes such as imposition and preflighting, printing, post-processing such as trimming and binding, and the like. In the present disclosure, a job is not limited to a process related to printing.

The input unit 8 is a component that accepts instructions entered by a user. Specifically, in one example, the input unit 8 is configured as a pointing device, such as a mouse, and one or more input keys, such as a keyboard.

Note that the input unit 8 is not limited to a pointing device and input keys, and may also be configured as a touch panel or any other device capable of accepting instructions entered by a user.

### <Production management system 10>

The production management system 10 is an example of an information processing system of the present disclosure, and is a system that manages the production of printed material. The production management system 10 includes a function causing the display unit 7 to display various screens, including the job management interface 20. Note that the production system 1 may be understood as one example of an information processing system.

Specifically, the production management system 10 functions as a computer and includes a processor 11, storage 12, and a memory 13, as illustrated in Fig. 1.

For the processor 11, a general-purpose processor such as a central processing unit (CPU) is used, for example.

The storage 12 stores various programs, including an information processing program 12A, and various data. The storage 12 is achieved specifically by a recording device such as a hard disk drive (HDD), a solid-state drive (SSD), or flash memory. The storage 12 is not limited to being configured as a single device, and may also be configured as multiple devices provided in physically separate locations. Note that the information processing program 12A is one example of an information processing program.

The memory 13 is a work area that the processor 11 uses to execute various programs, and temporarily records various programs or various data when the processor 11 executes a process. The processor 11 reads out various programs, including the information processing program 12A, from the storage 12 into the memory 13, and executes the programs using the memory 13 as a work area.

In the production management system 10, the processor 11 executes a processing program to achieve various functions for executing predetermined processing. Hereinafter, a functional configuration achieved through cooperation between the processor 11 serving as a hardware resource and the processing program serving as a software resource will be described.

### <Functional configuration of production management system 10>

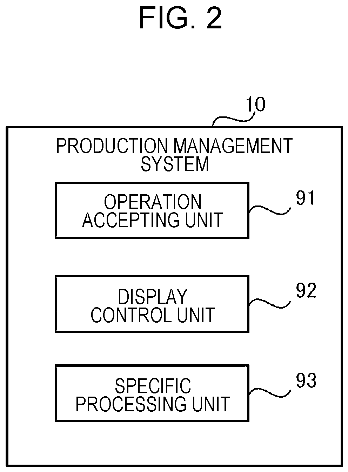

Fig. 2 is a block diagram illustrating an example of a functional configuration of the production management system 10 according to the exemplary embodiment. In one example, as illustrated in Fig. 2, the production management system 10 is provided with an operation accepting unit 91, a display control unit 92, and a specific processing unit 93.

The operation accepting unit 91 accepts user operations with respect to the job management interface 20. The display control unit 92 displays the job management interface 20 and controls the display of a schedule screen 34 in the job management interface 20. The specific processing unit 93 performs specific processing with respect to the selection of an unassigned job.

In the present exemplary embodiment, the operation accepting unit 91 accepts selection of a specific area while a schedule screen on which job assignment is limited is being displayed. The display control unit 92 displays second schedule screen for displaying the specific area. The second schedule screen is displayed at a larger scale than the first schedule screen. The operation accepting unit 91 also accepts placement of a card of an unassigned job on the second schedule screen. Upon accepting placement of a card of an unassigned job on the second schedule screen, the display control unit 92 updates the card of the accepted job (hereinafter referred to as a job card) to a corresponding position on the first schedule screen. The following references examples of screens to describe processing by each unit in detail.

The job management interface 20 in Fig. 3 is an example of a job management interface. In the present disclosure, a job management interface refers to a screen display that enables a user to review and edit a schedule of jobs. The job management interface 20 includes a display selection area 31, a menu area 32, an unassigned job area 33, and a schedule screen 34.

The display selection area 31 allows the user to select the display format in the job management interface 20 when setting a schedule of tasks for each piece of printed material for which an order has been received.

The menu area 32 is for setting the display form of display content to be displayed on the schedule screen 34 in accordance with the display format selected in the display selection area 31. The menu area 32 may be used to adjust the range of dates and times, or in other words, the calendar display period, over which a task schedule is to be set. Also, the time axis of jobs displayed on the schedule screen 34 may be changed using a display scale setting 32A to set the magnification ratio, or in other words the scale, of the time axis.

In the unassigned job area 33, unassigned job cards 33A that have not been assigned to equipment are displayed. The user is able to assign a job to the operating schedule of the equipment 2, 4 by selecting an unassigned job card 33A and then dragging and dropping to place the selected card on the schedule screen 34. Note that if the product is printed material, a printing job corresponds to the equipment 2 (printer 2), and a processing job corresponds to the equipment 4 (processing machine 4).

On the schedule screen 34, the operating schedules of jobs assigned to equipment information 34A indicating the equipment 2, 4 are arranged and displayed as job cards 34B. The display of the schedule screen 34 is divided into time periods according to the job time axis set by the display scale 32A. The display in Fig. 3 is an example in which the time axis has been set to 12 hours (units of days). Using units of 12 hours allows partial information related to the attributes of jobs to be displayed in the job cards 34B. The time axis area displayed in parallel with equipment information 34A on the schedule screen 34 and a second schedule screen 35N described later is an example of an area where a job is assignable according to the present disclosure.

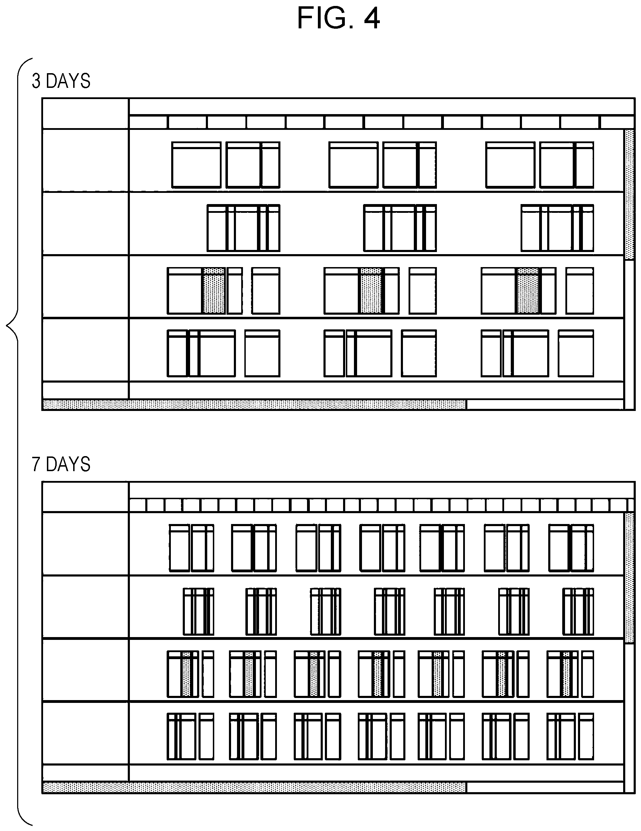

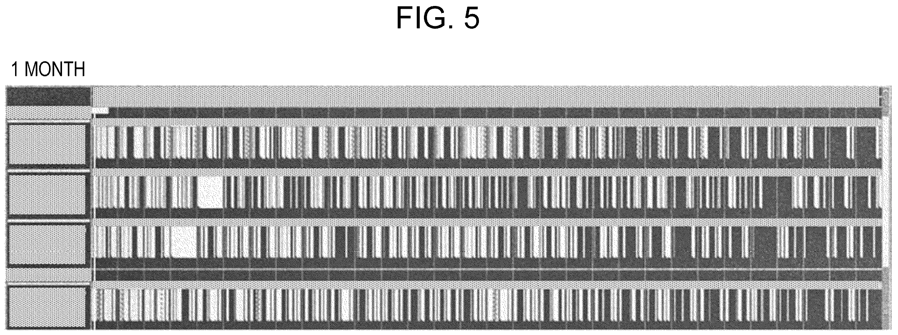

The following describes an example in which the assignment of a job on the schedule screen 34 is limited. Figs. 4 and 5 are display examples in the case of changing the time-period units of the schedule screen 34. Fig. 4 schematically represents the case of changing the time axis of the schedule screen 34 from 3 days to 7 days, and Fig. 5 illustrates a screen example in the case in which the time axis of the schedule screen 34 has been set to 1 month. As the time axis is increased in duration from 3 days, to 7 days, to 1 month, the scale becomes an overview display that is small in scale, and the display of job cards 34B becomes finer. According, on a reduced-scale display, information may no longer be displayed on the job cards themselves. In this case, direct placement of a job card 34B is restricted on the schedule screen 34 (hereafter referred to as the first schedule screen 34M) showing an overview display on a long-term time axis such as 7 days or 1 month. That is, the operation of selecting a job card 33A in the unassigned job area 33 and placing the selected job card on the first schedule screen 34M by drag and drop is prohibited. This is because when placing a job card 34B, it may be necessary to control the position of the job card 34B with fine-grained time specification, but such control of fine-grained time specification may not be reflected on an overview display of a long-term schedule. For this reason, it may be necessary to switch to the short-term time axis display to place the job card 34B, but in the case of placing multiple job cards 34B, it may be necessary to switch the time axis of the schedule display switched many times, which is burdensome to the user.

Accordingly, in the present exemplary embodiment, a specific area selected on the first schedule screen 34M with a time axis with limited ability to display updates and changes is displayed on a second schedule screen 35N.

### (First form related to specific area display)

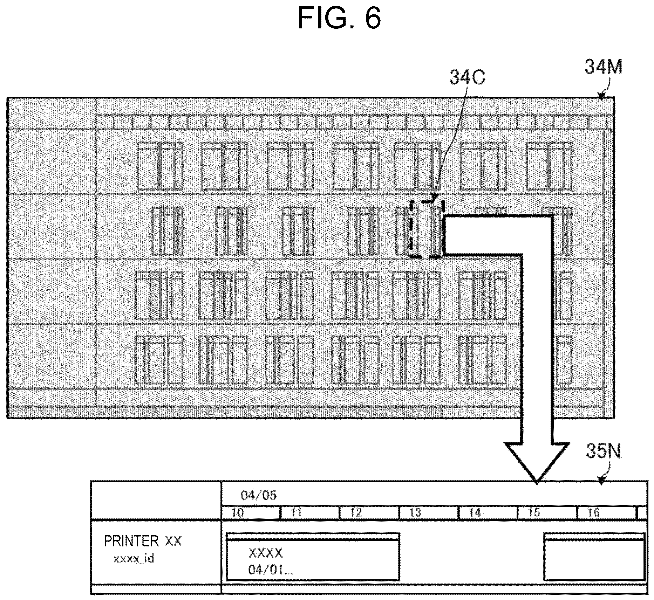

A first form of specific area display is the case of range selection by the user. Fig. 6 is an example of accepting selection of the range of a specific area according to a user operation, and displaying the selected range as a specific area on the second schedule screen 35N. On the first schedule screen 34M, the time axis is set to units of 7 days, and operations for placing job cards 34B are limited. At this point, the operation accepting unit 91 accepts the selection of a range (34C) according to a user operation for a specific area on the first schedule screen 34M. The user operation involves selecting a rectangle drawn over the desired range while in the overview display. The display control unit 92 extracts the specific area corresponding to the period of the accepting range (34C), and displays the extracted specific area on the second schedule screen 35N as a separate screen, such as a pop-up window. The display on the second schedule screen 35N corresponds to the selected range, that is, the period of the specific area. Note that the second schedule screen 35N may be displayed in any way on the display unit 7, such as a separate screen superimposed onto, displayed parallel to, or split off from the first schedule screen 34M. By making it possible to update the placement of a job card 34B in parallel with the review of a long-term overview display of the schedule in this way, the convenience of job assignment may be improved while also ensuring the perspicuity of schedule review.

### (Second form related to specific area display)

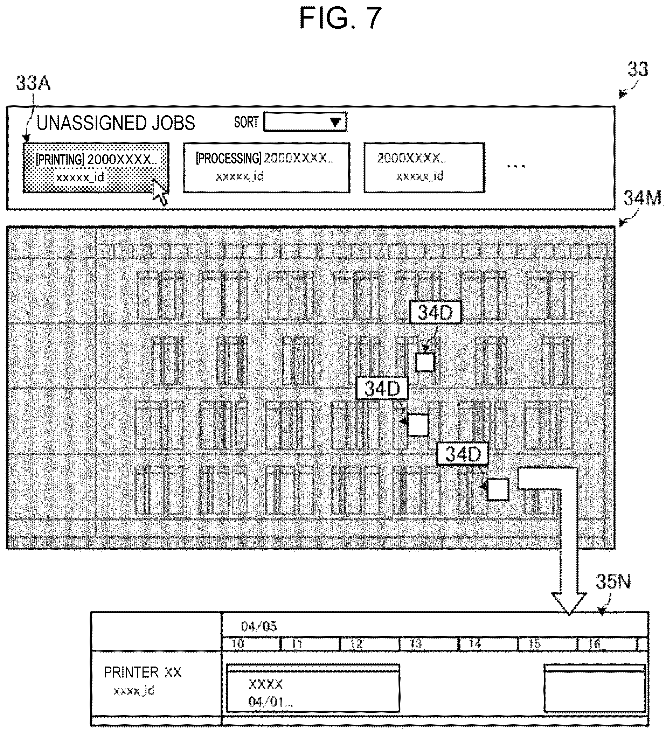

A second form of specific area display is the case of performing specific processing. Fig. 7 is an example of accepting selection of the range of a specific area from specific processing, and displaying the selected range on the second schedule screen 35N. The operation accepting unit 91 accepts user selection of an unassigned job (job card 33A) from the unassigned job area 33. The change management unit 93 displays, with respect to the selected unassigned job, multiple candidate areas 34D to serve as candidates for the specific area that are selectable on the first schedule screen 34M. The change management unit 93 displays an enlarged view of a candidate area 34D for which a selection has been accepted from the user from among the multiple candidate areas 34D as the specific area on the second schedule screen 35N. Note that although an example of using square marks to display the candidate areas 34D is illustrated, the configuration is not limited thereto, and candidate areas may also be distinguished and displayed by using marks such as circles and double circles according to an order of priority.

Any method may be used in the processing for picking the multiple candidate areas 34D. For example, (1) picking by a trained model (AI) or (2) picking by referring to workflow information may be used. In (1) picking by a trained model, a trained model that has been trained in advance using a dataset based on user-selected areas is used. The change management unit 93 uses the trained model to extract and display candidate areas for the selected unassigned job. In (2) picked by referring to workflow information, candidate areas are determined and displayed for the selected unassigned job by referring to workflow information. The workflow information retains information pertaining to attributes of jobs and information pertaining to attributes of equipment to which jobs are assignable. The information pertaining to attributes of jobs is, for example, a task ID corresponding to a job, a product name, a part name, a task name, a previous task ID, a next task ID, an in-house/outsourced classification, an outsourcing number, a schedule resource (equipment), a scheduled start/order date/time, a scheduled completion/delivery date/time, and a product shipment deadline. The information pertaining to attributes of equipment is, for example, an equipment ID, an equipment type, an equipment name, a number of printer colors, and a processing task type, and may also include a per-day or per-shift utilization rate for each piece of equipment. The change management unit 93 refers to the workflow information about the selected unassigned job, determines, as candidate areas, areas where equipment is free after the completion time of the job immediately before, before the start time of job immediately after, and for a length of time equal to or greater than a job duration calculated individually for each piece of equipment, and displays the determined candidate areas. The change management unit 93 may refer to the workflow information and make a determination based on a product type associated with the job (if the product is printed material, a type such as flyer or book), or make a determination based on a history of past orders by the same customer who ordered the job.

The display control unit 92 may also refer to attributes of the selected unassigned job and change the time axis on the first schedule screen 34M on which operations are limited. For example, offset printing and digital printing may have different operating times. For this reason, if the job has a short operating time as an attribute, the time axis of 7 days on which operations are usually limited may be treated as a time axis on which operations are not limited and used as the usual schedule screen 34. Conversely, if the job has a long operating time as an attribute, the time axis of 3 days on which operations are usually not limited may be treated as a time axis on which operations are limited and changed to the first schedule screen 34M on which operations are limited.

### (Third form related to specific area display)

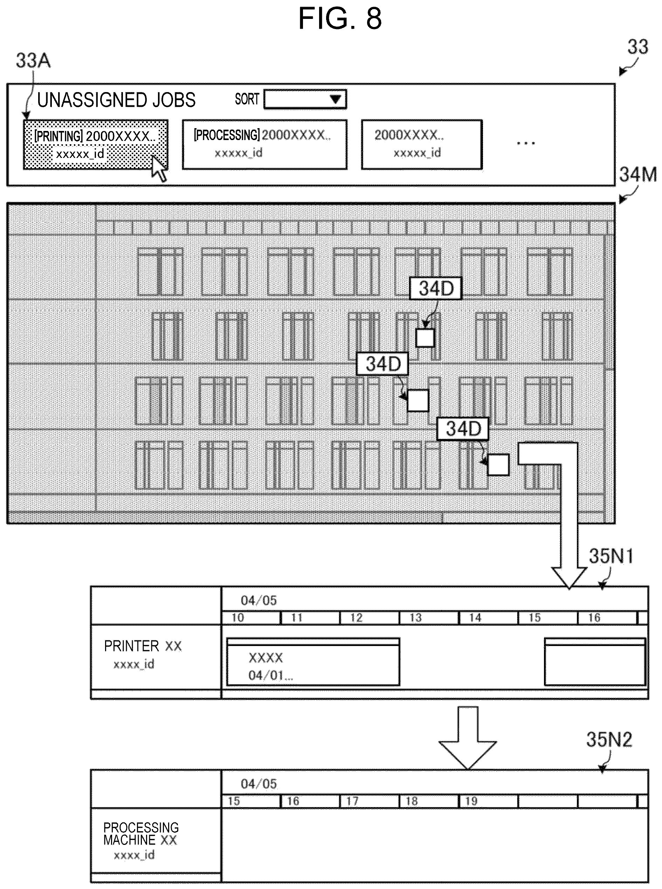

A third form of specific area display is the case of displaying candidate areas of another, different job. In product management processes, a print job may be followed by another, different processing job, and the process continues. For this reason, if the selected unassigned job is a print job and a processing process exists after the process of the print job, a screen for each is displayed. As illustrated in Fig. 8, a second schedule screen 35N1 corresponding to (the area of) a printer 2 that corresponds to a print job is displayed, and a second schedule screen 35N2 corresponding to (the area of) a processing machine 4 that serves as a candidate for a processing job is also displayed. The second schedule screen 35N2 of the processing machine 4 is an example of a second candidate area that serves as a candidate for scheduling a different job according to an exemplary embodiment of the present disclosure. Note that although a single second candidate area is illustrated as an example, multiple second candidate areas may also be displayed.

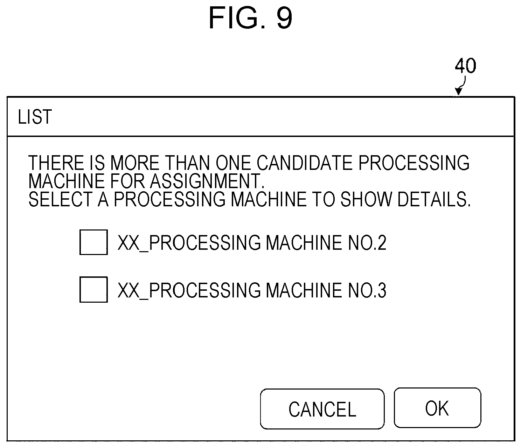

If there are multiple candidates of areas where the different job could be assigned, or in other words, if there are multiple equipment candidates, a list of the multiple candidates is displayed. Fig. 9 is an example of displaying a list of multiple candidates and prompting the user to select a candidate to be displayed. Accepting selection of a candidate for which to display the second schedule screen 35N2 from the list 40 causes the second schedule screen 35N2 corresponding to the resource of the accepted candidate to be displayed.

### <Flow of processes>

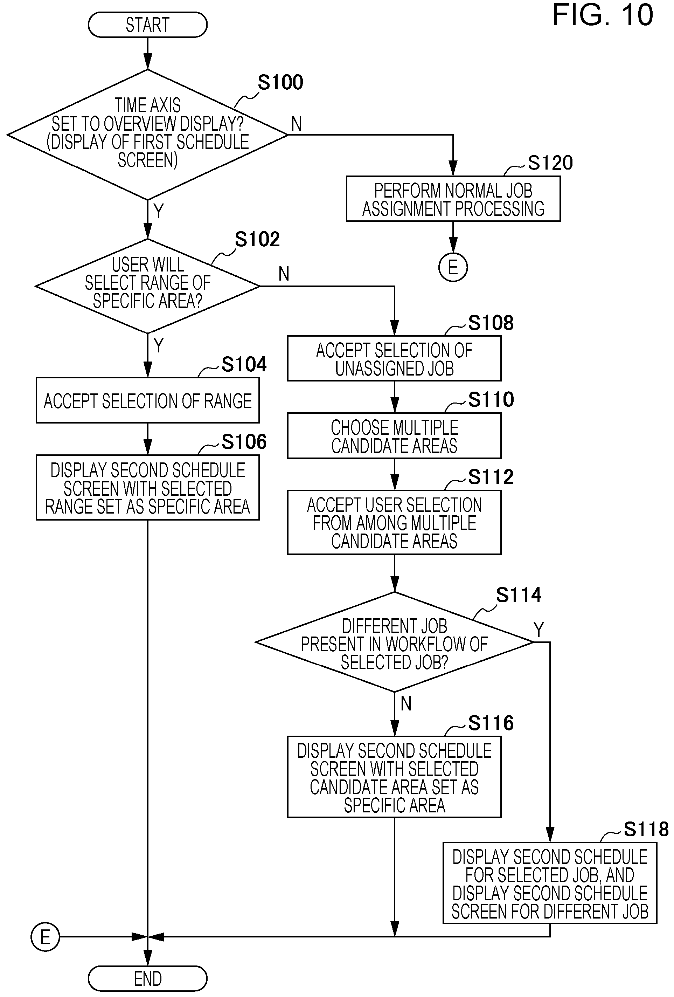

Next, a flow of processes by the production management system 10 will be described. Fig. 10 is a flowchart illustrating an example of the flow of information processes executed by the production management system 10. The processes are performed by having the processor 11 read out the information processing program 12A from the storage 12, load the program in the memory 13, and execute the program.

In step S100, the processor 11 determines whether the time axis of the job management interface 20 is set to the overview display. The overview display is the display of the first schedule screen 34M on which operations are limited. If the overview display is set, the flow proceeds to step S102. If the overview display is not set, the flow proceeds to step S120 and normal job assignment processing is performed on the schedule screen 34 on which operations are not limited.

In step S102, the processor 11 determines whether or not the user will select the assignment range. If the user will select the assignment range, the flow proceeds to step S104. If the user will not select the assignment range, the flow proceeds to step S108.

In step S104, the processor 11 accepts selection of the range of the specific area from the user.

In step S106, the processor 11 displays the second schedule screen 35N with the accepted range set as the specific area.

In step S108, the processor 11 accepts selection of an unassigned job.

In step S110, the processor 11 picks and displays, with respect to the selected unassigned job, multiple candidate areas 34D to serve as candidates for the specific area that are selectable on the first schedule screen 34M.

In step S112, the processor 11 accepts user selection from among the multiple candidate areas 34D.

In step S114, the processor 11 refers to the workflow information about the selected unassigned job and determines whether a different job is present in the workflow of the selected unassigned job. For example, if the selected unassigned job is a print job, a processing job may be present as a different job. If a different job is present, the flow proceeds to step S118. If a different job is not present, the flow proceeds to step S116.

In step S116, the processor 11 displays the second schedule screen 35N with the candidate area 34D for which a selection has been accepted set as the specific area.

In step S118, the processor 11 displays the second schedule screen 35N1 for the selected job with the candidate area 34D for which a selection has been accepted set as the specific area, and also displays the second schedule screen 35N2 for the different job. If there are multiple areas of candidate resources for the different job, the list 40 is displayed and the user is prompted to make a selection.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system comprising:
   a memory; and
   a processor configured to:
      in a job management interface having areas where jobs are assignable to individual resources,
      accept selection of a specific area while a first schedule screen on which job assignment is limited is being displayed;
      display a second schedule screen on which the selected specific area is displayed at a larger scale than on the first schedule screen; and
      upon accepting placement of a card of an unassigned job on the second schedule screen, update the card of the accepted job to a corresponding position on the first schedule screen.
(((2))) The information processing system according to claim 1, wherein the processor is configured to perform selection of the specific area according to selection of a range given by a user operation or selection in specific processing with respect to selection of an unassigned job.
(((3))) The information processing system according to (((2))), wherein the processor is configured to perform the specific processing such that if the unassigned job is selected, a plurality of candidate areas to serve as candidates of the specific area that are selectable on the first schedule screen are displayed, and an enlarged view of the candidate area for which a selection is accepted from a user from among the plurality of candidate areas is displayed as the specific area on the second schedule screen.
(((4))) The information processing system according to (((3))), wherein the processor is configured to perform the specific processing such that the candidate areas for the selected unassigned job are displayed upon being extracted by a trained model that has been trained in advance using a dataset based on user-selected areas.
(((5))) The information processing system according to (((3))), wherein the processor is configured to perform the specific processing such that the candidate areas are determined and displayed for the selected unassigned job by referring to workflow information that includes attributes of jobs and attributes of resources to which jobs are assignable.
(((6))) The information processing system according to (((5))), wherein the processor is configured to perform the specific processing such that workflow information about the selected unassigned job is referenced, areas that are free after the completion time of the job immediately before, before the start time of job immediately after, and for a length of time equal to or greater than a job duration calculated individually for each resource are determined as the candidate areas, and the determined candidate areas are displayed.
(((7))) The information processing system according to any one of (((2))) to (((6))), wherein the processor is configured to perform the specific processing such that workflow information about the selected unassigned job is referenced, and if the selected unassigned job is followed by another, different job and the different job is unassigned, a second candidate area to serve as a candidate for scheduling the different job is also displayed on the second schedule screen.
(((8))) The information processing system according to (((7))), wherein if there are a plurality of candidates of areas where the different job could be assigned, the processor is configured to display a list of the plurality of candidates, and accept selection of a candidate to be displayed on the second schedule screen from the list.
(((9))) The information processing system according to (((7))), wherein after the card of the selected unassigned job is placed in an area of the second schedule screen, the processor is configured to determine and display the second candidate area to serve as a candidate for assignment of the different job based on the area where the unassigned job is placed.
(((10))) The information processing system according to any one of (((1))) to (((9))), wherein:
   operations related to assignment of the job on the first schedule screen are limited as a result of switching of a time axis, and
   the processor is configured to refer to attributes of the selected unassigned job and change the time axis on which operations are limited on the first schedule screen.
(((11))) An information processing program causing a computer to execute a process comprising:
   in a job management interface having areas where jobs are assignable to individual resources,
   accepting selection of a specific area while a first schedule screen on which job assignment is limited is being displayed;
   displaying a second schedule screen on which the selected specific area is displayed at a larger scale than on the first schedule screen; and
   upon accepting placement of a card of an unassigned job on the second schedule screen, updating the card of the accepted job to a corresponding position on the first schedule screen.

According to (((1))), it is possible to improve the convenience of job assignment on a schedule screen on which job assignment operations are limited.

According to (((2))), it is possible to improve convenience with consideration for the selection of a specific area.

According to (((3))), it is possible to improve convenience by considering the display of multiple candidate areas as specific processing.

According to (((4))), it is possible to improve the accuracy of candidate areas by considering the display of multiple candidate areas by a trained model.

According to (((5))), it is possible to refer to a history and improve the accuracy of candidate areas by considering workflow information.

According to (((6))), it is possible to refer to a history and improve the accuracy of candidate areas by considering workflow information.

According to (((7))), it is possible to improve convenience by considering a candidate area for a different job.

According to (((8))), it is possible to improve convenience by considering multiple candidate areas for a different job.

According to (((9))), it is possible to improve convenience by adjusting the candidate area of a different job with consideration for the area where a job is placed.

According to (((10))), it is possible to improve convenience by considering the attributes of a job on a schedule screen with a time axis.

According to (((11))), it is possible to improve the convenience of job assignment on a schedule screen on which job assignment operations are limited.

According to (((12))), it is possible to improve the convenience of job assignment on a schedule screen on which job assignment operations are limited.

## Claims

1. An information processing system comprising:
a memory; and
a processor configured to:
in a job management interface having areas where jobs are assignable to individual resources,
accept selection of a specific area while a first schedule screen on which job assignment is limited is being displayed;
display a second schedule screen on which the selected specific area is displayed at a larger scale than on the first schedule screen; and
upon accepting placement of a card of an unassigned job on the second schedule screen, update the card of the accepted job to a corresponding position on the first schedule screen.

2. The information processing system according to claim **1,** wherein the processor is configured to perform selection of the specific area according to selection of a range given by a user operation or selection in specific processing with respect to selection of an unassigned job.

3. The information processing system according to claim 2, wherein the processor is configured to perform the specific processing such that if the unassigned job is selected, a plurality of candidate areas to serve as candidates of the specific area that are selectable on the first schedule screen are displayed, and an enlarged view of the candidate area for which a selection is accepted from a user from among the plurality of candidate areas is displayed as the specific area on the second schedule screen.

4. The information processing system according to claim 3, wherein the processor is configured to perform the specific processing such that the candidate areas for the selected unassigned job are displayed upon being extracted by a trained model that has been trained in advance using a dataset based on user-selected areas.

5. The information processing system according to claim 3, wherein the processor is configured to perform the specific processing such that the candidate areas are determined and displayed for the selected unassigned job by referring to workflow information that includes attributes of jobs and attributes of resources to which jobs are assignable.

6. The information processing system according to claim 5, wherein the processor is configured to perform the specific processing such that workflow information about the selected unassigned job is referenced, areas that are free after the completion time of the job immediately before, before the start time of job immediately after, and for a length of time equal to or greater than a job duration calculated individually for each resource are determined as the candidate areas, and the determined candidate areas are displayed.

7. The information processing system according to any one of claims 2 to 6, wherein the processor is configured to perform the specific processing such that workflow information about the selected unassigned job is referenced, and if the selected unassigned job is followed by another, different job and the different job is unassigned, a second candidate area to serve as a candidate for scheduling the different job is also displayed on the second schedule screen.

8. The information processing system according to claim 7, wherein if there are a plurality of candidates of areas where the different job could be assigned, the processor is configured to display a list of the plurality of candidates, and accept selection of a candidate to be displayed on the second schedule screen from the list.

9. The information processing system according to claim 7, wherein after the card of the selected unassigned job is placed in an area of the second schedule screen, the processor is configured to determine and display the second candidate area to serve as a candidate for assignment of the different job based on the area where the unassigned job is placed.

10. The information processing system according to any one of claims 1 to 9, wherein:
operations related to assignment of the job on the first schedule screen are limited as a result of switching of a time axis, and
the processor is configured to refer to attributes of the selected unassigned job and change the time axis on which operations are limited on the first schedule screen.

11. An information processing method comprising:
in a job management interface having areas where jobs are assignable to individual resources,
accepting selection of a specific area while a first schedule screen on which job assignment is limited is being displayed;
displaying a second schedule screen on which the selected specific area is displayed at a larger scale than on the first schedule screen; and
upon accepting placement of a card of an unassigned job on the second schedule screen, updating the card of the accepted job to a corresponding position on the first schedule screen.

12. An information processing program causing a computer to execute a process comprising:
in a job management interface having areas where jobs are assignable to individual resources,
accepting selection of a specific area while a first schedule screen on which job assignment is limited is being displayed;
displaying a second schedule screen on which the selected specific area is displayed at a larger scale than on the first schedule screen; and
upon accepting placement of a card of an unassigned job on the second schedule screen, updating the card of the accepted job to a corresponding position on the first schedule screen.
